# EUROPÄISCHE PATENTSCHRIFT

(11) **EP 0 703 654 B1**
(45) Veröffentlichungstag und Bekanntmachung des Hinweises auf die Patenterteilung: **04.11.1998**
(21) Anmeldenummer: 95114353.6
(22) Anmeldetag: 13.09.1995
(51) Int. Cl.: H02J 9/06, H02J 7/10, G01K 17/00

(54) **Elektronischer Verbrauchszähler mit Versorgungsschaltung**
Electronic consumption meter with power supply circuit
Compteur de consommation avec circuit d'alimentation

(30) Priorität: 22.09.1994 DE 4433783
(43) Veröffentlichungstag der Anmeldung: 27.03.1996
(73) Patentinhaber: SPANNER-POLLUX GmbH, D-67063 Ludwigshafen (DE)
(72) Erfinder: Blumbach, Rainer Dr., D-67122 Altripp (DE)
(74) Vertreter: Patentanwälte Möll und Bitterich

(56) Entgegenhaltungen:
- EP-A- 0 286 544
- DE-U- 8 909 930

## Beschreibung

Die Erfindung betrifft elektronische Verbrauchszähler für Wärmeenergie mit Versorgungsschaltung und dergleichen gemäß dem Oberbegriff des Anspruchs 1.

Elektronische Verbrauchszähler, z. B. zum Erfassen der in Wohnungen, Gebäuden, Wohnkomplexen und dergleichen verbrauchten Wärme, sind häufig batteriegepuffert, da gewünscht wird, daß die Meßfunktion unabhängig von der Verfügbarkeit einer externen Spannungsversorgung, z. B. dem 230 V Netz, garantiert ist. Dabei wird die Batteriekapazität für eine bestimmte Einsatzdauer, z. B. für die Eichgültigkeitsdauer; ausgelegt, und zwar angepaßt an ein bestimmtes Belastungsprofil. Dieses Belastungsprofil ist im wesentlichen vorgegeben durch die Häufigkeit der Meßvorgänge und die Häufigkeit der Datenkommunikation mit einem externen Abfrage- und Auswertegerät. Man vergleiche z. B. das Buch von F. Adunka "Wärmemengenmessung", Vulkan-Verlag Essen, 1984, insbesondere S. 138, oder die EP 0 608 494 A2 bzw. die EP 0 628 792 A1.

Wird beispielsweise für Überwachungs- oder Regelungszwecke der Verbrauchszähler mit einem externen Überwachungs- oder Regelgerät verbunden, so erhöht sich die Anzahl der Messungen und/oder die Häufigkeit der Datenkommunikation und der Batterie wird mehr Strom entnommen. Dies führt zu einer unter Umständen drastisch reduzierten Einsatzdauer der Batterie. Bei erhöhter Stromentnahme fällt die Batteriespannung bekanntlich schnell ab und unterschreitet frühzeitig die für die einwandfreie Funktion der in den Verbrauchszähler eingebauten integrierten Schaltkreise erforderliche Mindestbetriebsspannung.

Zur Vermeidung dieses Nachteils wird z. B. in dem Standardwerk "Halbleitertechnik" von U. Tietze und Ch. Schenk, Springer Verlag, Berlin, Heidelberg, New York, 4. Auflage 1980, insbesondere S. 564 - 566, eine externe Spannungsversorgung mit einer Pufferbatterie vorgeschlagen. Diese Schaltung ist jedoch zur Versorgung von Verbrauchszählern nicht einsetzbar.

Während der Versorgung des Verbrauchszählers durch eine externe Versorgungsschaltung muß ferner darauf geachtet werden, daß die Batterie nicht in einen unzulässigen Betriebszustand gebracht wird. Zur Versorgung von batteriegepufferten Geräten werden derzeit bevorzugt Lithiumbatterien eingesetzt, da sie über viele Jahre hinweg einsatzbereit bleiben. Lithiumbatterien dürfen jedoch nicht geladen werden, da sie sonst explodieren. Bei der externen Spannungsversorgung von mit Lithiumbatterien gepufferten Verbrauchszählern müssen daher in die Batterie fließende Ladeströme sorgfältig vermieden werden. Gleichzeitig muß jedoch sichergestellt werden, daß die integrierten Schaltkreise des Verbrauchszählers tatsächlich von der externen Spannungsquelle und nicht von der eingebauten Pufferbatterie versorgt werden.

Der vorliegenden Erfindung liegt die Aufgabe zugrunde, einen Verbrauchszähler mit batteriegepufferten integrierten Schaltkreisen anzugeben, der mit einer elektronischen Versorgungsschaltung ausgerüstet ist, die bei der Speisung der Halbleiterschaltungen aus einer externen Spannungsquelle jederzeit die zuvor erläuterten Bedingungen genau erfüllt.

Diese Aufgabe wird gelöst durch einen elektronischen Verbrauchszähler mit den Merkmalen des Anspruchs 1.

Dank der Erfindung liefert die Versorgungsschaltung an die batteriegepufferten Schaltkreise eine Spannung, die stets genau die Höhe besitzt, die die Batteriespannung unmittelbar zuvor gehabt hatte. Dies wird durch den Speicherkondensator erreicht, der bei Batteriespeisung der Schaltkreise ständig auf der aktuellen Batteriespannung gehalten wird und der bei Netzspeisung den Ausgang des als Spannungsregler eingesetzten Pufferverstärkers auf exakt diesen Spannungswert steuert.

Der verwendete Umschalter kann ein elektromechanisches Relais sein.

Gemäß einer Weiterbildung der Erfindung besitzt der Umschalter drei Schaltstellungen, wobei in der dritten Schaltstellung die Verbindung zwischen Batterie und Versorgungsschaltung unterbrochen ist. Diese Variante ist besonders dann von Vorteil, wenn bei einem Ausfall der externen Spannungsquelle der als Pufferverstärker geschaltete Operationsverstärker in einen undefinierter Zustand geraten kann, in dem die Hochohmigkeit des Eingangs, an den der Speicherkondensator angeschlossen ist, nicht mehr garantiert ist.

Gemäß einer vorteilhaften Ausgestaltung der Erfindung ist der Umschaltkontakt als Halbleiterschalter realisiert, und zwar mit wenigstens zwei Umschaltsätzen. Auf diese Weise ist es möglich zu verhindern, daß die bei Halbleiterschaltern unvermeidlichen Innenwiderstände die Exaktheit der Spannung am Ausgang des Pufferverstärkers stören.

Weitere Ausgestaltungen der Erfindung sind Gegenstand der restlichen Unteransprüche.

Die Erfindung, deren Vorteile und vorteilhaften Ausgestaltungen sollen im übrigen anhand der Zeichnung in Form von Ausführungsbeispielen erläutert werden. Es zeigen
- Fig. 1: ein Schaltbild eines elektronischen Verbrauchszählers mit integrierten Schaltkreisen und einer elektronischen Versorgungsschaltung zur Speisung des Verbrauchszählers aus einem externen Schaltgerät,
- Fig. 2: einen Ausschnitt aus der Schaltungsanordnung der Fig. 1 mit den Änderungen, die den Einsatz von Halbleiterschaltern ermöglichen, und
- Fig. 3: einen Ausschnitt aus der Schaltungsanordnung der Fig. 1 mit den Änderungen, die die Verwendung von speziellen Operationsverstärkern ermöglichen.

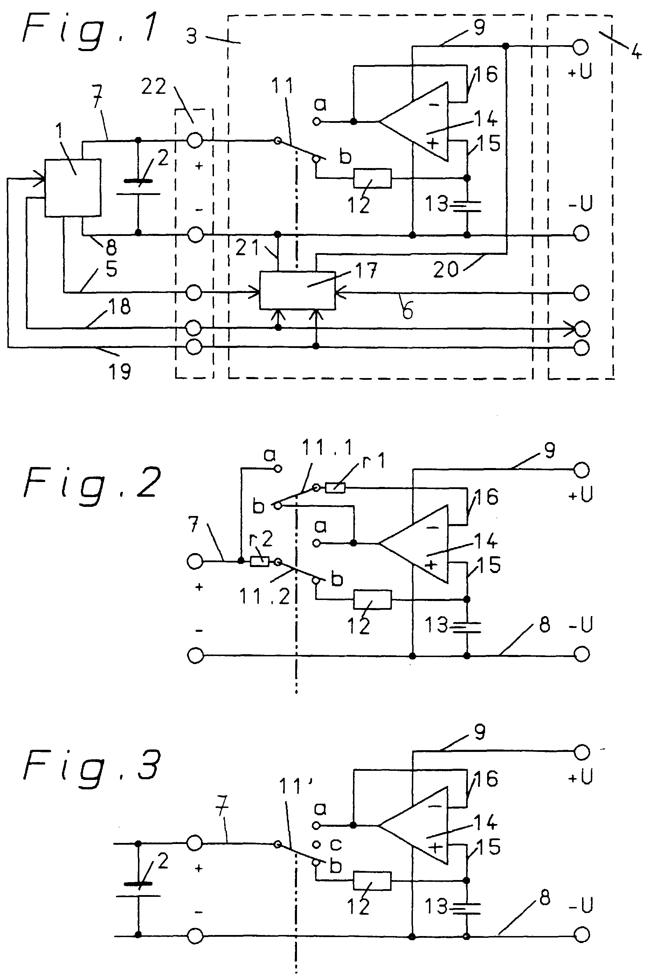

Fig. 1 zeigt einen Verbrauchszähler 1, in dem eine elektronische Schaltung vorgesehen ist, die die Verbrauchsmeßwerte erfaßt, speichert und/oder umrechnet und die bei Bedarf Daten und Informationen ausgibt bzw. einliest. Zur Spannungsversorgung ist eine Batterie 2 vorgesehen, die fest an eine Plus-Versorgungsschiene 7 und eine Minus-Versorgungsschiene 8 des Verbrauchszählers 1 geschaltet ist.

An den Verbrauchszähler 1 ist z. B. über eine Steckverbindung 22 eine elektronische Versorgungsschaltung 3 angeschaltet, die den Verbrauchszähler 1 aus einem externen elektrischen Gerät 4 mit elektrischer Energie geeigneter Spannung versorgt. Die Versorgungsschaltung 3 besteht im wesentlichen aus einem als Pufferverstärker geschalteten Operationsverstärker 14, dessen Minus-Eingang 16 zu diesem Zweck direkt mit dem Ausgang verbunden ist, einem Umschalter 11 und einem Speicherkondensator 13 mit Ladewiderstand 12. Die Eingänge 15, 16 des Operationsverstärkers 14 sind hochohmig.

Der Umschalter 11 wird von einer Schaltlogik 17 gesteuert. Diese wertet dazu Signale aus, die vom Verbrauchszähler 1 oder vom externen elektrischen Gerät 4 stammen. In allen Fällen handelt es sich dabei um Signale, die einen erhöhten Stromverbrauch des Verbrauchszählers 1 bzw. seiner elektronischen Schaltkreise signalisieren, den die Batterie 2 nicht oder nur bei drastisch verkürzter Lebensdauer decken könnte, so daß auf externe Spannungsversorgung umgeschaltet werden muß.

Beispielsweise schicken der Verbrauchszähler 1 über eine Leitung 5 oder das externe elektrische Gerät 4 über eine Leitung 6 ein Anforderungs- bzw. Umschaltsignal, wenn ein erhöhter Energiebedarf zu erwarten ist. Zusätzlich oder alternativ dazu kann die Schaltlogik 17 aber auch den Datenverkehr auf den Datenleitungen 18, 19 zwischen Verbrauchszähler 1 und externem Schaltgerät 4 überwachen und bei Datenverkehr selbsttätig die externe Spannungsversorgung einschalten, indem der Umschalter 11 in Stellung a gebracht wird.

Während der nur wenig Strom verbrauchenden Phasen des Verbrauchszählers 1 schaltet die Steuerlogik 17 den Umschalter 11 in Stellung b. Dabei wird der Speicherkondensator 13 über den Ladewiderstand 12 und den Umschaltkontakt 11 b mit der Plus-Versorgungsschiene 7 des Zählers 1 bzw. der Batterie 2 verbunden. Der andere Pol des Kondensators 13 ist mit der Minus-Versorgungsschiene 8 verbunden. Dadurch lädt sich der Speicherkondensator 13 stets auf die momentane Spannung der Batterie 2 auf, ohne daß dabei der Batterie 2 ein merkbarer Energieanteil entzogen wird.

Benötigt der Verbrauchszähler 1 mehr Strom und schaltet die Steuerlogik 17 den Umschalter 11 in die Stellung a, wird die Plus-Versorgungsschiene 7 mit dem Ausgang des Operationsverstärkers 14 verbunden. Da dieser als Pufferverstärker geschaltet ist, hat sein Ausgang exakt dieselbe Spannungshöhe wie der Speicherkondensator 13; die Plus-Versorgungsschiene 7 des Verbrauchszählers 1 bleibt exakt auf derselben Spannungshöhe, die sie kurz zuvor hatte, als der Verbrauchszähler 1 nur wenig Strom aus der Batterie 2 entnommen hatte.

Da der Innenwiderstand des als Spannungsfolger verwendeten Pufferverstärkers erheblich geringer ist als der Innenwiderstand der Batterie 2, wird der Verbrauchszähler 1 jetzt praktisch ausschließlich von der externen Versorgungsspannung U versorgt. Da sich jedoch der Spannungswert an der Plusversorgungsschiene 7 nicht ändert, fließt kein Strom in die Batterie 2, so daß diese auch nicht beschädigt wird. Die Batterie 2 kann somit unmittelbar zwischen die Plus- und Minus-Versorgungsschienen 7, 8 des Verbrauchszählers 1 geschaltet werden, um bei einem Ausfall der externen Versorgungsspannung U die Mindestfunktionen des Verbrauchszählers 1 sicherzustellen.

Fig. 2 zeigt eine Schaltungsvariante zur Fig. 1. Der Umschalter 11 ist hier als Halbleiterschalter realisiert. Die Schaltstrecken der Halbleiterschalter haben unvermeidbare Innenwiderstände r1, r2. Dank der Verwendung zweier Umschaltsätze 11.1, 11.2 in der gezeigten Anordnung wird die Wirkung des Innenwiderstandes r2 stark vermindert, so daß die vom Ausgang des Operationsverstärkers 14 an die Plus-Versorgungsschiene 7 gelieferte Spannung trotz des Spannungsabfalls an r2 aufgrund des vom Verbrauchszähler 1 entnommenen Stroms wieder den exakt richtigen Wert erhält.

Dies wird dadurch erreicht, daß dem als Pufferverstärker geschalteten Operationsvestärker 14 an seinem Minus-Eingang 16 zum Vergleich mit der Spannung des Kondensators 13 nicht seine Ausgangsspannung, sondern über den Schalter 11.1 in der Stellung a die Spannung an der Plus-Versorgungsschiene 7 zugeführt wird. Da der Minus-Eingang 15 des Operationsverstärkers 14 hochohmig ist, wirkt sich ein von Null verschiedener Innenwiderstand r1 des Schalters 11.1 nicht aus.

Fig. 3 zeigt eine weitere Variante der Schaltungsanordnung nach Fig. 1. Hier ist ein Umschalter 11' mit drei Schaltstellungen a, b, c vorgesehen. Während die beiden Schaltstellungen a, b der Fig. 1 entsprechen, ist in der dritten Schaltstellung c die Verbindung der Plus-Versorgungsschiene 7 mit der elektronischen Versorgungsschaltung 3 unterbrochen, so daß jeglicher Abfluß von Batteriestrom unterbleibt. Dies ist insbesondere dann von Vorteil, wenn die Gefahr besteht, daß über den Ladewiderstand 12 Batteriestrom in den Pluseingang 15 des Operationsverstärkers 14 fließt, wenn sich bei einem Ausfall der Versorgungsspannung U undefinierte Zustände der Versorgungsschaltung 3 bzw. seiner elektronischen Komponenten 14, 17 einstellen.

## Patentansprüche

1. Elektronischer Verbrauchszähler (1) für Wärmeenergie und dergleichen, enthaltend
- eine elektronische Schaltung, die Meßwerte erfaßt, speichert und/oder umrechnet und bei Bedarf Daten ausgibt bzw. einliest,
- eine Batterie (2), die ständig an den Verbrauchszähler (1) angeschlossen ist, um dessen Mindestfunktionen aufrechtzuerhalten,
- und eine elektronische Versorgungsschaltung (3), die den Verbrauchszähler (1) aus einem externen Gerät (4) mit elektrischer Spannung geeigneter Größe versorgt,
gekennzeichnet durch die Merkmale:
- die Versorgungsschaltung (3) umfaßt
-- wenigstens einen Operationsverstärker (14) mit zwei hochohmigen Eingängen (15, 16),
--- geschaltet als Pufferverstärker,
-- einen Speicherkondensator (13),
--- der Speicherkondensator (13) ist an den Plus-Eingang (15) des Pufferverstärkers (14) geschaltet,
-- einen dem Speicherkondensator (13) vorgeschalteten Ladewiderstand (12),
-- einen Umschalter (11, 11'),
--- dessen Schaltzunge mit der Batterie (2),
--- dessen erster Kontakt (a) mit dem Ausgang des Pufferverstärkers (14) und
--- dessen zweiter Kontakt (b) mit dem Ladewiderstand (12) verbunden ist,
-- und eine Schaltlogik (17), die den Umschalter (11, 11') so steuert, daß
--- bei Speisung des Verbrauchszählers (1) aus dem externen elektrischen Gerät (4) der Ausgang des Pufferverstärkers (14) parallel zur Batterie (2) liegt und
--- bei Speisung des Verbrauchszählers (1) aus der Batterie (2) die Serienschaltung aus Ladewiderstand (12) und Speicherkondensator (13) parallel zur Batterie (2) liegt.

2. Verbrauchszähler nach Anspruch 1, gekennzeichnet durch das Merkmal:
- der Verbrauchszähler (1) schickt ein internes Anforderungssignal (Leitung 5) an die Schaltlogik (17), wenn ein erhöhter Energiebedarf besteht, wobei die Schaltlogik (17) den Umschalter (11, 11') so steuert, daß der Ausgang des Pufferverstärkers (14) parallel zur Batterie (2) liegt.

3. Verbrauchszähler nach Anspruch 1 oder 2, gekennzeichnet durch das Merkmal:
- die Schaltlogik (17) besitzt einen Eingang für ein externes Anforderungssignal (Leitung 6).

4. Verbrauchszähler nach einem der Ansprüche 1 bis 3, gekennzeichnet durch das Merkmal:
- die Schaltlogik (17) wertet das Vorhandensein oder Fehlen der externen Versorgungsspannung (U) (Leitung 20) aus.

5. Verbrauchszähler nach einem der Ansprüche 1 bis 4, gekennzeichnet durch das Merkmal:
- die Schaltlogik (17) überwacht den Datenverkehr auf den Datenleitungen (18, 19) zwischen Verbrauchszähler (1) und externem elektrischem Gerät (4).

6. Verbrauchszähler nach einem der Ansprüche 1 bis 5, gekennzeichnet durch die Merkmale:
- der Umschalter (11') besitzt drei Schaltstellungen (a, b, c),
- in der dritten Schaltstellung (c) ist die Verbindung zwischen Batterie (2) und Versorgungsschaltung (3) unterbrochen.

7. Verbrauchszähler nach einem der Ansprüche 1 bis 6, gekennzeichnet durch das Merkmal:
- der Umschalter (11, 11') ist als Halbleiterschalter mit wenigstens zwei Umschaltsätzen (11.1, 11.2) ausgebildet.

8. Verbrauchszähler nach einem der Ansprüche 1 bis 7, gekennzeichnet durch das Merkmal:
- zwischen Versorgungsschaltung (3) und Verbrauchszähler (1) mit Batterie (2) ist eine Steckverbindung (22) vorgesehen.

## Claims

1. Electronic consumption meter (1) for heat energy and similar, comprising
- an electronic circuit which acquires, stores and/or converts measured values and outputs or reads in data if required,
- a battery (2) which is constantly connected to the consumption meter (1) in order to maintain its minimum function,
- and an electronic supply circuit (3) which supplies the consumption meter (1) from an external device (4) with voltage of an appropriate magnitude,
characterised by the features:
- the supply circuit (3) comprises
-- at least one operational amplifier (14) with two high-impedance inputs (15, 16),
--- connected as a buffer amplifier,
-- a storage capacitor (13),
--- the storage capacitor (13) is connected to the positive input (15) of the buffer amplifier (14),
-- a charging resistor (12) connected upstream of the storage capacitor (13),
-- a change-over switch (11, 11'),
--- the reed of which is connected to the battery (2),
--- the first contact (a) of which is connected to the output of the buffer amplifier (14) and
--- the second contact (b) of which is connected to the charging resistor (12),
-- and switching logic (17) which controls the change-over switch (11, 11') such that
--- the output of the buffer amplifier (14) is connected across the battery (2) when the consumption meter (1) is powered from the external electrical device (4) and
--- the series circuit consisting of the charging resistor (12) and the storage capacitor (13) is connected across the battery (2) when the consumption meter (1) is powered from the battery (2).

2. Consumption meter according to claim 1, characterised by the feature:
- the consumption meter (1) sends an internal request signal (line 5) to the switching logic (17) if there is an increased energy demand, the switching logic (17) controlling the change-over switch (11, 11') such that the output of the buffer amplifier (14) is connected across the battery (2).

3. Consumption meter according to claim 1 or 2,
characterised by the feature:
- the switching logic (17) has an input for an external request signal (line 6).

4. Consumption meter according to one of claims 1 to 3, characterised by the feature:
- the switching logic (17) determines the presence or absence of the external supply voltage (U) (line 20).

5. Consumption meter according to one of claims 1 to 4, characterised by the feature:
- the switching logic (17) monitors the data traffic on the data lines (18, 19) between the consumption meter (1) and the external electrical device (4).

6. Consumption meter according to one of claims 1 to 5, characterised by the features:
- the change-over switch (11') has three switching positions (a, b, c),
- in the third switching position (c) the connection between the battery (2) and the supply circuit (3) is interrupted.

7. Consumption meter according to one of claims 1 to 6, characterised by the feature:
- the change-over switch (11, 11) is formed as a semiconductor switch with at least two change-over assemblies (11.1, 11.2).

8. Consumption meter according to one of claims 1 to 7, characterised by the feature:
- a plug connection (22) is provided between the supply circuit (3) and the consumption meter (1) with battery (2).

## Revendications

1. Compteur électronique de consommation (1) pour énergie thermique et similaire, comprenant un circuit électronique, qui enregistre, mémorise et/ou convertit les valeurs mesurées et qui, éventuellement, édite ou liste des données, une batterie (2), qui est raccordée constamment au compteur de consommation (1), afin de maintenir ses fonctions minimales, et un circuit d'alimentation électronique (3), qui alimente le compteur de consommation (1) à partir d'un appareil externe (4) avec une tension électrique de grandeur appropriée, caractérisé en ce que le circuit d'alimentation (3) comprend au moins un amplificateur opérationnel (14) avec deux entrées à résistance élevée (15,16) monté comme amplificateur tampon, un condensateur à mémoire (13), qui est monté sur l'entrée positive (15) de l'amplificateur tampon (14), une résistance de charge (12) montée en amont du condensateur à mémoire (13), un commutateur inverseur (11,11'), dont la lame de commutation est reliée à la batterie (2), dont le premier contact (a) est relié à la sortie de l'amplificateur tampon (14), et dont le deuxième contact (b) est relié à la résistance de charge (12), et une logique de commutation (17) qui commande le commutateur inverseur (11, 11'), de telle façon que la sortie de l'amplificateur tampon (14) est en parallèle avec la batterie (2) en cas d'alimentation du compteur de consommation (1) à partir de l'appareil électrique (4) externe, et le circuit en série comprenant la résistance de charge (12) et le condensateur à mémoire (13) est monté en parallèle avec la batterie (2) en cas d'alimentation du compteur de consommation (1) à partir de la batterie (2).

2. Compteur de consommation selon la revendication 1, caractérisé en ce que le compteur de consommation (1) envoie un signal de demande interne (ligne 5) à la logique de commutation (17) lorsqu'on a un besoin d'énergie important, la logique de commutation (17) commandant le commutateur inverseur (11, 11') de telle façon que la sortie de l'amplificateur tampon (14) se trouve en parallèle avec la batterie (2).

3. Compteur de consommation selon la revendication 1 ou 2, caractérisé en ce que la logique de commutation (17) a une entrée pour un signal de demande externe (ligne 6).

4. Compteur de consommation selon l'une quelconque des revendications 1 à 3, caractérisé en ce que la logique de commutation (17) analyse la présence ou l'absence de la tension d'alimentation externe (U) (ligne 20).

5. Compteur de consommation selon l'une quelconque des revendications 1 à 4, caractérisé en ce que la logique de commutation (17) contrôle le trafic de données sur les lignes de données (18,19) entre le compteur de consommation (1) et l'appareil électrique externe (4) .

6. Compteur de consommation selon l'une quelconque des revendications 1 à 5, caractérisé en ce que le commutateur inverseur (11') a trois positions de commutation (a, b, c), la liaison entre la batterie (2) et le circuit d'alimentation (3) étant interrompue dans la troisième position de commutation (c).

7. Compteur de consommation selon l'une quelconque des revendications 1 à 6, caractérisé en ce que le commutateur inverseur (11, 11') est conçu comme un commutateur à semi-conducteurs avec au moins deux ensembles d'inversion (11.1, 11.2).

8. Compteur de consommation selon l'une quelconque des revendications 1 à 7, caractérisé en ce qu'un connecteur (22) est prévu entre le circuit d'alimentation (3) et le compteur de consommation (1) avec batterie (2).
